# EUROPÄISCHE PATENTSCHRIFT

(11) **EP 0 399 167 B1**
(45) Veröffentlichungstag und Bekanntmachung des Hinweises auf die Patenterteilung: **14.04.1993**
(21) Anmeldenummer: 90105530.1
(22) Anmeldetag: 23.03.1990
(51) Int. Cl.: B60J 7/053, B60H 1/26

(54) **Lüfterdach für Fahrzeuge**
Sliding roof for vehicles
Toit ouvrant pour véhicules

(30) Priorität: 24.05.1989 DE 3916905; 14.09.1989 DE 3930755
(43) Veröffentlichungstag der Anmeldung: 28.11.1990
(73) Patentinhaber: Webasto AG Fahrzeugtechnik, D-82131 Stockdorf (DE)
(72) Erfinder: Reihl, Peter, D-8000 München 60 (DE); Fürst, Arpad, D-8034 Germering (DE); Wingen, Bernhard, D-8152 Feldkirchen (DE); Schmid, Alfred, D-8000 München 71 (DE); Shreiter, Thomas, D-8000 München 70 (DE); Händler, Erich, D-813 Starnberg (DE)

(56) Entgegenhaltungen:
- DE-A- 3 725 982
- DE-A- 3 807 961
- DE-U- 1 886 813

## Beschreibung

Die Erfindung bezieht sich auf ein Lüfterdach mit einem in einer festen Dachhaut ausgebildeten Dachausschnitt, der mittels eines Deckels verschließbar ist, der beidseits mit einer vordere und hintere Höhenverstelleinrichtungen aufweisenden Stellmechanik in Wirkungsverbindung steht, wobei der Deckel mittels der vorderen Höhenverstelleinrichtungen ausgehend von der Schließstellung um eine an oder nahe seiner Hinterkante liegende Schwenkachse in eine Lüfterstellung verschwenkbar ist, in welcher die Deckelvorderkante in Abstand unterhalb der Dachebene liegt, während die Deckelhinterkante mindestens näherungsweise in Höhe der festen Dachhaut gehalten wird, wobei der Deckel mittels der hinteren Höhenverstelleinrichtungen mit seiner Hinterkante unter die feste Dachhaut absenkbar ist, und wobei der abgesenkte Deckel mittels eines Antriebs entlang von dachfesten Längsführungen mindestens näherungsweise parallel zu der festen Dachhaut nach hinten unter die Dachhaut in eine Offenstellung verschiebbar ist, in welcher der Deckel den Dachausschnitt mindestens teilweise freilegt.

Aus der am 13.09.89 veröffentlichten EP-A-0 331 910 ist ein Lüfterdach dieser Art beschrieben, bei welchem zu der Stellmechanik auf beiden Dachseiten jeweils eine langgestreckte Schiebekulisse gehört, die eine näherungsweise der Deckellänge entsprechende Länge hat und die entlang der dachfesten Längsführungen verschiebbar geführt sowie mit dem Deckel jeweils über mindestens einen vorderen und einen hinteren Deckelanschlußbolzen verbunden ist. Dabei greifen die Deckelanschlußbolzen in Kulissenbahnen der betreffenden Schiebekulisse ein. Auf diese Weise stehen die vorderen und die hinteren Höhenverstelleinrichtungen mit dem Deckel in allen Deckelstellungen ständig in Eingriff.

Bei einem vorbekannten Lüfterdach (DE-U-81 19 662) mit schwenkbarem und wahlweise abnehmbarem, aber nicht in Dachlängsrichtung verschiebbarem Deckel, sind zur Höhenverstellung der Deckelvorderkante an der Deckelunterseite Stützhebel angelenkt, die über einen Griff wahlweise aufgestellt oder umgelegt werden können.

Es ist ferner ein Lüfterdach bekannt (DE-A-3149 977), bei dem vor einem in eine Lüfterstellung (d.h. eine Stellung mit unter die Dachebene abgesenkter Deckelvorderkante) schwenkbarem Deckel ein zweiter Deckel angeordnet ist. Dabei wird das vordere Ende von seitlichen Führungsstangen an einem vor der Vorderkante des Dachausschnitts dachfest angebrachten Lagerbock schwenkbeweglich und in Längsrichtung verschiebbar geführt, während das hintere Führungsstangenende am vorderen Ende des hinteren Deckels angelenkt ist. Am vorderen Ende des vorderen Deckels ist ein Führungsschlitten befestigt, der entlang den Führungsstangen verschoben werden kann. Wird die Vorderkante des hinteren Deckels von Hand abgesenkt, wird durch die Verbindung der Führungsstangen mit dem Führungsschlitten des vorderen Deckels auch der vordere Deckel in eine Schräglage gebracht, in der er sich über den hinteren Deckel schieben läßt, um einen vorderen Teil des Dachausschnittes freizulegen.

Der im Anspruch 1 angegebenen Erfindung liegt die Aufgabe zugrunde, ein Lüfterdach der eingangs genannten Art zu schaffen, das im Interesse der Kopffreiheit eine besonders flache Bauweise mit einer relativ einfachen, robusten und zuverlässigen Stellmechanik erlaubt.

Bei einem Lüfterdach mit den Merkmalen des Oberbegriffs des Patentanspruchs 1 wird diese Aufgabe erfindungsgemäß dadurch gelöst, daß die vorderen Höhenverstelleinrichtungen jeweils einen zwangsverstellbaren Schwenkhebel aufweisen, der im Bereich seines vorderen Endes für eine Drehbewegung um eine dachfeste, quer zur Deckelverschieberichtung verlaufende, mindestens nahezu waagrechte Achse gelagert ist und mit dem der Deckel nur im Bereich seiner vorderen Endstellung zwecks Höhenverstellung der Deckelvorderkante lösbar gekuppelt wird.

Bei dem Lüfterdach nach der Erfindung ist ein Mitbewegen der vorderen Höhenverstelleinrichtungen beim Verschieben des Deckels vermieden. Die vorderen Höhenverstelleinrichtungen haben einen extrem einfachen Aufbau, und sie nehmen in der für die Kopffreiheit entscheidenden lotrechten Richtung besonders wenig Platz in Anspruch.

Vorzugsweise sind deckelfeste Führungselemente, die an oder nahe der vorderen und der hinteren Kante des Deckels angeordnet sind, zwischen einer über den Längsführungen liegenden Stellung und einer mit den Längsführungen in lotrechter Richtung ausgerichteten Absenkstellung höhenverstellbar sowie in der Absenkstellung entlang den Längsführungen verschiebbar geführt. Dadurch wird auf einfache Weise eine sichere, stabile und rüttelfeste Führung des Deckels während seiner Verschiebebewegungen gewährleistet.

Der Schwenkhebel kann zweckmäßig zum lösbaren Kuppeln mit dem Deckel eine nach hinten offene Führungsbahn aufweisen, in welche ein deckelfestes Gleitelement eingreift, wenn der Deckel in der vorderen Endstellung steht. Dabei ist in weiterer Ausgestaltung der Erfindung die Anordnung so getroffen, daß der Schwenkhebel bei abgesenkter Deckelvorderkante eine Stellung einnimmt, in welcher das offene Ende der Führungsbahn des Schwenkhebels mit einer Gleitbahn der dachfesten Längsführung für einen Übertritt des Gleitelements von der Führungsbahn in die Gleitbahn ausgerichtet ist. Dies erlaubt es dem Gleitelement, umnittelbar von der Schwenkhebel-Führungsbahn in die Längsführungs-Gleitbahn und umgekehrt überzutreten und damit den Deckel in seinem vorderen Bereich über die deckelfesten Gleitelemente auch in der Phase des Entkuppelns von und des Kuppelns mit den vorderen Höhenverstelleinrichtungen ständig zwangszuführen.

Zum Zwangsverstellen der Schwenkhebel sind zweckmäßig Betätigungsglieder vorgesehen, die mit dem Antrieb in ständiger Verbindung stehen. Mit dem Antrieb können ferner vorteilhaft Stützglieder zum Abstützen der Schwenkhebel in der der Deckelschließstellung entsprechenden Schwenklage verbunden sein. Durch diese Stützglieder wird der in der Schließstellung stehende Deckel in seinem vorderen Bereich in zuverlässigem Dichteingriff mit der festen Dachfläche gehalten.

Entsprechend einer weiteren Ausgestaltung der Erfindung ist eine Verriegelungsvorrichtung vorgesehen, welche die an oder nahe der Hinterkante des Deckels liegende Deckelschwenkachse in der Deckelschließstellung und während Schwenkbewegungen des Deckels zwischen der Schließstellung und der Lüfterstellung gegen ein Längsverschieben mit Bezug auf die feste Dachhaut verriegelt. Dadurch werden unerwünschte Verlagerungen der hinteren Deckelschwenkachse verhindert.

Die hinteren Höhenverstelleinrichtungen können einfach jeweils einen Ausstellhebel aufweisen, der einerseits an dem Deckel oder einem deckelfesten Teil und andererseits an einem Gleitstück angelenkt ist, das entlang der betreffenden Längsführung verschiebbar geführt ist. Dabei ist vorzugsweise dafür gesorgt, daß der Ausstellhebel eine mindestens näherungsweise lotrechte Stellung einnimmt, solange der Deckel in seiner vorderen Endstellung steht. Der Deckel wird dadurch hinten besonders sicher gehalten.

Der Gesamtaufbau wird bei hoher Stabilität weiter vereinfacht, wenn der Ausstellhebel mit dem Deckel oder dem deckelfesten Teil über einen Gelenkbolzen verbunden ist, der zugleich das nahe der Deckelhinterkante liegende deckelfeste Führungselement bildet, das bei abgesenkter Deckelhinterkante mit der Längsführung während Deckelverschiebebewegungen in Eingriff kommt.

In weiterer Ausgestaltung der Erfindung ist eine lösbare Kupplung zum selbsttätigen Kuppeln des Antriebs mit dem an dem Ausstellhebel angelenkten Gleitstück für das Verschwenken des Ausstellhebels und das Verschieben des Deckels vorgesehen, wobei zweckmäßig die Verriegelungsvorrichtung und die lösbare Kupplung derart in Wechselwirkung miteinander stehen, daß beim Einrücken der Kupplung die Verriegelungsvorrichtung zwangsweise entriegelt wird und beim Verriegeln der Verriegelungsvorrichtung die Kupplung zwangsweise ausgerückt wird.

Zur Erhöhung der Kopffreiheit trägt weiter bei, wenn die Stellmechanik und die dachfesten Längsführungen zu beiden Seiten des Dachausschnitts und des Deckels unterhalb der festen Dachhaut angeordnet sind und wenn beim Verstellen des Deckels von der Lüfterstellung in die Offenstellung die Deckelvorderkante vor und/oder während der Deckelverschiebebewegung zu einer nach oben gerichteten Bewegung in eine Höhe veranlaßt wird, die zwischen der Höhenlage der Deckelvorderkante in der Lüfterstellung und der Deckelvorderkante in der Schließstellung liegt.

Ist unterhalb des Deckels ein Schiebehimmel angeordnet, kann dieser erfindungsgemäß über eine Mitnehmervorrichtung mit dem Antrieb des Deckels derart gekuppelt sein, daß der in seiner Schließstellung stehende Schiebehimmel beim Verschwenken des Deckels von der Schließstellung in die Lüfterstellung selbsttätig in eine Stellung zurückgeschoben wird, in welcher vor dem Schiebehimmel ein Lüftungsspalt freigelegt wird. Wenn dabei zu dem Antrieb des Deckels ein Antriebskabel und mit dem Antriebskabel in fester Antriebsverbindung stehende Bauteile gehören, wird eine konstruktiv besonders einfache und robuste Lösung dadurch erhalten, daß die Mitnehmereinrichtung einen Mitnehmer aufweist, der an dem Kabel oder einem der mit dem Kabel fest verbundenen Bauteile angebracht ist. Insbesondere kann der Mitnehmer mit einem antriebskabelfesten Teil der lösbaren Kupplung verbunden sein, die dem selbsttätigen Kuppeln des Antriebs mit dem an dem Ausstellhebel angelenkten Gleitstück für das Verschwenken des Ausstellhebels und das Verschieben des Deckels dient.

Ausführungsbeispiele der Erfindung sind im folgenden anhand der Zeichnung näher erläutert. Dabei zeigen:
- Fign. 1 bis 4: Längsschnitte durch das Lüfterdach bei verschiedenen Stellungen des Deckels,
- Fign. 5a und 5b: in größerem Maßstab einen Längsschnitt entsprechend Fig. 1, der Einzelheiten der Verstellmechanik erkennen läßt,
- Fign. 6a und 6b: einen Längsschnitt entsprechend den Fign. 5a und 5b bei in der Lüfterstellung stehendem Deckel,
- Fig. 7: einen Längsschnitt entsprechend den Fign. 5b und 6b bei in die Verschiebestellung gebrachtem und teilweise zurückgeschobenem Deckel,
- Fig. 8: eine Teildraufsicht auf das Lüfterdach bei in der Schließstellung stehendem Deckel entsprechend den Fign. 5a und 5b,
- Fig. 9: den Schnitt entlang der Linie IX-IX der Fig. 5a,
- Fig. 10: den Schnitt entlang der Linie X-X der Fig. 5b,
- Fign. 11 und 12: Längsschnitte durch ein Lüfterdach mit zusätzlichem Schiebehimmel,
- Fign. 13 und 14: Teillängsschnitte entsprechend den Fign. 5b und 6b für eine abgewandelte Ausführungsform des Lüfterdaches mit selbsttätig verstellbarem Schiebehimmel,
- Fig. 15: den Schnitt entlang der Linie XV-XV der Fig. 13 sowie
- Fign. 16 und 17: Teillängsschnitte für den vorderen Lüfterdachbereich, die zwei unterschiedliche Ausbildungen in diesem Bereich erkennen lassen.

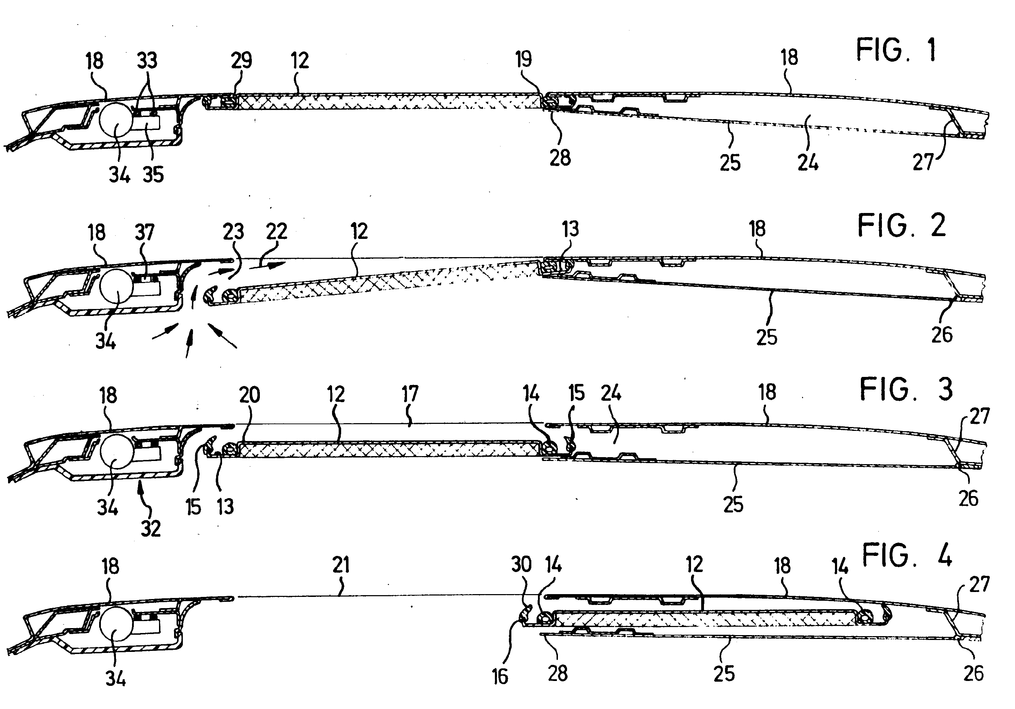

Entsprechend der schematischen Darstellung der Fign. 1 bis 4 weist das veranschaulichte Eindeckel-Lüfter-Schiebedach einen Deckel 12 mit einer ringsumlaufenden, vorspringenden festen Wasserrinne 13 auf. Zu dem Deckel 12 gehören ferner ringsumlaufende Dichtungen 14 und 15, von denen die innere Dichtung 14 in die Wasserrinne 13 eingelegt und die äußere Dichtung 15 auf einen abgesetzten Randflansch 16 aufgesetzt ist. Es versteht sich, daß die Dichtungen 14 und 15, gegebenenfalls einschließlich der Wasserrinne 13, auch zu einem einstückigen Profilformteil von rings um den Deckel gleichbleibendem Querschnitt zusammengefaßt sein können.

Mittels des Deckels 12 kann entsprechend Fig. 1 ein Dachausschnitt 17 verschlossen werden, der in einer festen Dachhaut 18 ausgebildet ist. Der Deckel 12 läßt sich mittels einer weiter unten näher erläuterten Verstellmechanik um eine (gedachte) an oder nahe seiner Hinterkante 19 liegende Schwenkachse in eine Lüfterstellung gemäß Fig. 2 schwenken, in welcher die Deckelvorderkante 20 in Abstand unterhalb der Dachebene liegt, die bei 21 angedeutet ist. Dabei wird die Deckelhinterkante 19 mindestens näherungsweise in Höhe der festen Dachhaut 18 gehalten. Wenn während der Fahrt des Fahrzeuges an der Außenseite der Dachhaut 18 ein Unterdruck gegenüber dem im Fahrgastraum herrschenden Druck entsteht, bildet sich ein Luftstrom aus, der in Fig. 2 bei 22 angedeutet ist. Das Wageninnere wird durch den Spalt 23 zwischen Deckelvorderkante 20 und fester Dachhaut 18 entlüftet.

Der im vorderen Teil der festen Dachhaut 18 ausgebildete Dachausschnitt 17 läßt sich, falls erwünscht, mindestens teilweise freilegen, indem der Deckel 12, vorzugsweise ausgehend von der Lüfterstellung gemäß Fig. 2, mit seiner Hinterkante 19 unter die feste Dachhaut 18 um einen Betrag abgesenkt wird, der vorzugsweise kleiner als die Absenkung der Deckelvorderkante 20 in der Lüfterstellung (Fig. 2) ist. Bei diesem bevorzugten Funktionsablauf wird gleichzeitig die zuvor in die Lüfterstellung abgesenkte Deckelvorderkante 20 in eine Zwischenstellung zwischen der Lüfterstellung (Fig. 2) und der Schließstellung (Fig. 1) angehoben. Der Deckel 12 wird auf diese Weise in eine Schiebestellung gebracht, in der er im wesentlichen parallel zu der Dachhaut 18 bzw. der Dachebene 21 liegt (Fig. 3). Danach kann der Deckel 12 nach hinten unter die Dachhaut 18 in eine Offenstellung verschoben werden, in welcher der Deckel 12 den Dachausschnitt 17 mindestens teilweise freilegt (Fig. 4). Der Deckel 12 wird dabei in einem Raum 24 zwischen dem an den Dachausschnitt 17 nach hinten anschließenden Teil der Dachhaut 18 und einem darunter liegenden Festhimmel 25 aufgenommen. Der Festhimmel 25 kann in nicht näher dargestellter Weise (z.B. entsprechend der Anordnung gemäß DE-A-38 07 961) bei 26 an eine dachfeste Querstrebe 27 um einen Querachse verstellbar angelenkt und mit seinem vorderen Ende 28 nach oben federnd vorgespannt sein (Fign. 1 und 2). Beim Absenken der Deckelhinterkante 19 in die Schiebestellung gemäß Fig. 3 wird der Festhimmel 25 von dem Deckel 12 vorne nach unten gedrückt, um den Deckel 12 in den Raum 24 einschieben zu können (Fign. 3 und 4).

Wie aus Fig. 1 hervorgeht, untergreift die umlaufende Wasserrinne 13 des Deckels 12 in der Deckelschließstellung den Randspalt 29 zwischen dem Deckelaußenrand und dem Rand des Dachausschnitts 17. Die Dichtung 14 wird dabei von unten gegen die Dachhaut 18 im Randbereich des Dachausschnittes 17 angepreßt. Dabei legt sich zusätzlich die Dichtung 15 mit einer federnd nachgiebigen Nase 30 gegen die Unterseite der Dachhaut 18 an.

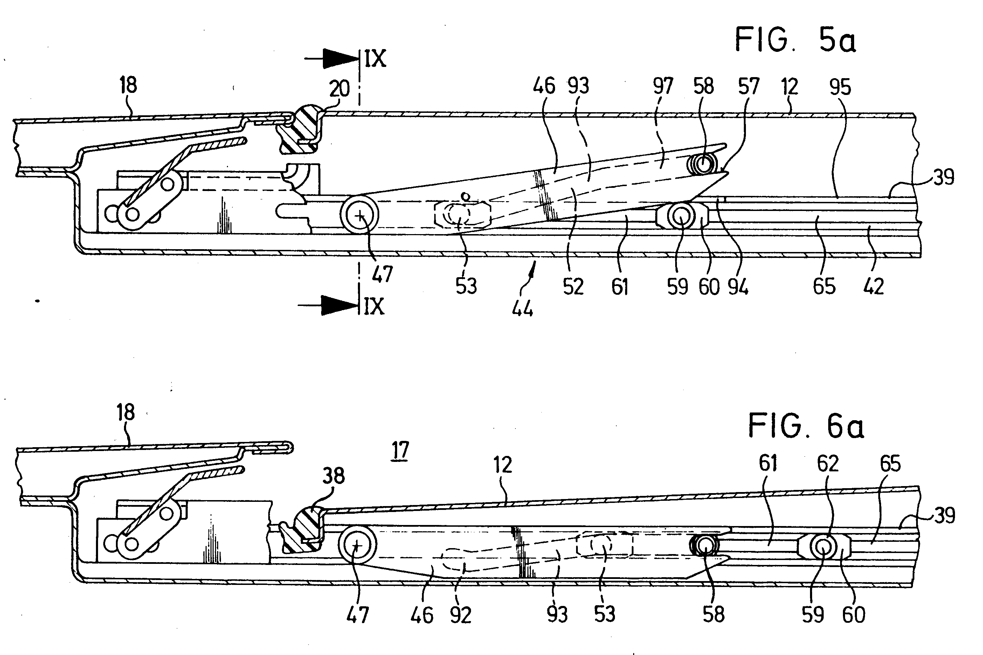

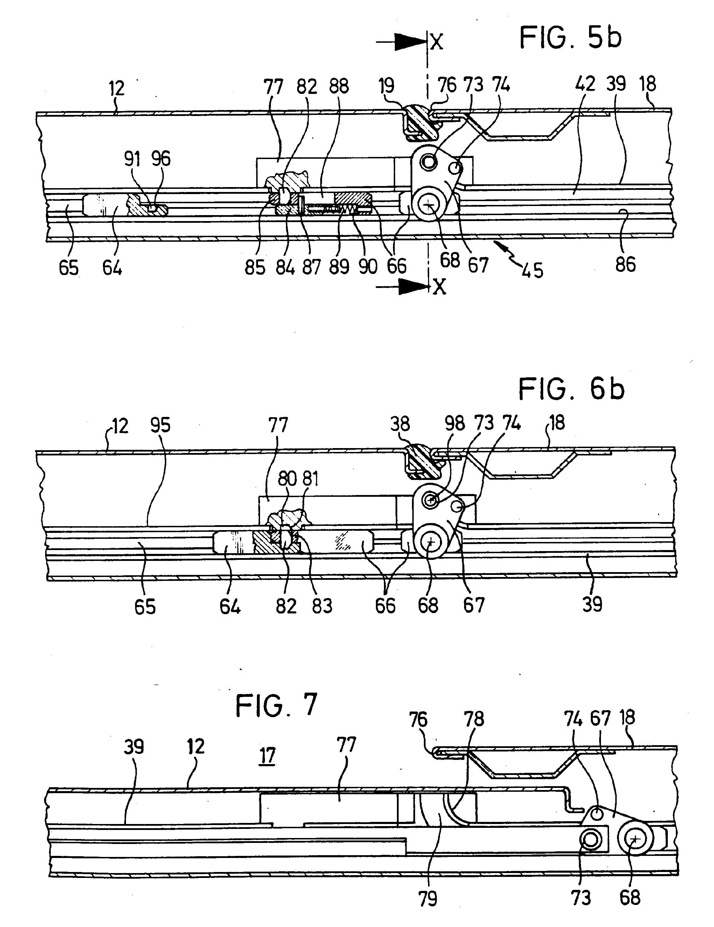

In den Fign. 5 bis 10 ist eine abgewandelte Deckel- und Dichtungsausbildung veranschaulicht, bei welcher die Wasserrinne 13 weggelassen ist und die Dichtungen 14 und 15 zu einem einzigen Dichtungsprofil 38 zusammengefaßt sind, das auf einen nach unten abgesetzten, in waagrechter Richtung vorspringenden Randflansch 16' des Deckels 12 aufgesetzt ist.

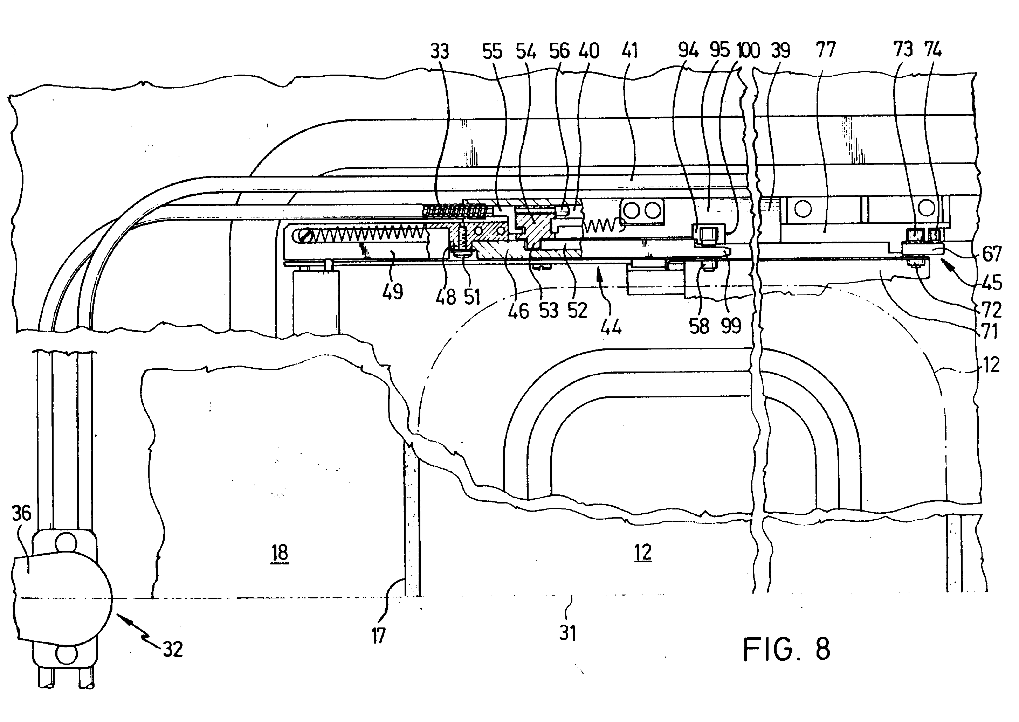

Die Begriffe "vorne" und "hinten" beziehen sich vorliegend auf die Vorwärtsfahrtrichtung des Kraftfahrzeuges, in welches das Dach eingebaut ist. Des weiteren ist das erläuterte Lüfterdach einschließlich seiner Stellmechanik im wesentlichen spiegelsymmetrisch mit Bezug auf eine Längsmittelachse 31 (Fig. 8) aufgebaut. Die nachstehende Erläuterung bezieht sich auf die in der Draufsicht rechte Dachseite, gilt jedoch entsprechend auch für die linke Dachseite.

Die Verstellbewegungen werden dem Deckel 12 von einem insgesamt mit 32 bezeichneten Antrieb aufgezwungen, der zwei Antriebskabel 33, beispielsweise in Form von drucksteifen Gewindekabeln, aufweist, die mittels einer gemeinsamen Antriebseinrichtung in Längsrichtung verstellt werden können. In den Fign. 1 bis 4 ist als Antriebseinrichtung ein Antriebsmotor 34 mit nachgeschaltetem Untersetzungsgetriebe 35 angedeutet. Die Fig. 8 zeigt als Alternative dazu eine Antriebseinrichtung in Form einer Handkurbel 36. Die Antriebseinrichtung 34 bzw. 36 treibt ein Ritzel 37 an, das mit beiden Antriebskabeln 33 in Antriebsverbindung steht. Zu beiden Seiten des Dachausschnitts 17 erstreckt sich jeweils eine Längsführung 39, die beispielsweise als dachfest montierte Führungsschiene oder als Teil eines Dachrahmens ausgebildet sein kann. Jede der Längsführungen 39 umfaßt einen Kabelführungskanal 40 für das der jeweiligen Dachseite zugeordnete Antriebskabel 33, einen Kabelführungskanal 41 für das auslaufseitige Ende des der anderen Dachseite zugeordneten Antriebskabels 33 sowie eine Gleitbahn 42. Letztere ist zum Dachausschnitt 17 hin offen.

Die dem Verschwenken und Höhenverstellen des Deckels 12 dienende Stellmechanik weist eine vordere Höhenverstelleinrichtung 44 und eine hintere Höhenverstelleinrichtung 45 auf, die unter dem Einfluß der Verstellbewegung der Antriebskabel 33 unabhängig voneinander betätigbar sind und die im einzelnen in den Fign. 5 bis 10 veranschaulicht sind.

Zu der vorderen Höhenverstelleinrichtung 44 gehört ein zwangsverstellbarer Schwenkhebel 46. Der Schwenkhebel 46 ist im Bereich seines vorderen Endes für eine Drehbewegung um eine feststehende, quer zur Deckelverschieberichtung verlaufende, mindestens nahezu waagrechte Achse 47 gelagert. Für diesen Zweck erstreckt sich ein zylindrischer Vorsprung 48 einer an das vordere Ende der Längsführung 39 anschließenden, dachfesten Kulisse 49 durch eine Öffnung am vorderen Ende des Schwenkhebels 46 hindurch. Der Schwenkhebel 46 und die Kulisse 49 werden über eine in eine Gewindebohrung 50 der Kulisse 49 eingeschraubte Schraube 51 zusammengehalten. In Längsrichtung des Schwenkhebels 46 erstreckt sich eine Kulissenbahn 52, die nach hinten ansteigt. In die Kulissenbahn 52 greift ein Betätigungsglied in Form eines Kulissenzapfens 53 ein. Der Kulissenzapfen 53 ist Teil eines Mitnehmers 54, der über eine Verdrehsicherung 55 und eine Plombe 56 mit dem Antriebskabel 33 verbunden ist und dessen Längsbewegungen mitmacht. Die Kulissenbahn 52 geht im Bereich des hinteren Endes des Schwenkhebels 46 in eine gleichfalls in dem Schwenkhebel ausgebildete, nach hinten offene, gabelförmige Führungsbahn 57 über. An dem Deckel 12 oder einem deckelfesten Teil 71, beispielsweise einem Deckelrahmen, ist ein Gleitelement 58 angebracht, das sich in die Führungsbahn 57 einlegt, wenn der Deckel 12 seine vordere Endstellung gemäß den Fign. 1,2 und 3 einnimmt, wie dies in den Fign. 5a und 8 veranschaulicht ist. Die Führungsbahn 57 und das Gleitelement 58 sorgen auf diese Weise für eine lösbare Kupplung zwischen der vorderen Höhenverstelleinrichtung 44 und dem Deckel 12. Diese Kupplung wird selbsttätig eingerückt, wenn der Deckel 12 von einer zurückgeschobenen Stellung (Fig. 4) kommend seine vordere Endstellung erreicht. Umgekehrt wird diese Kupplung selbsttätig ausgerückt, wenn der Deckel 12 aus, seiner vorderen Endstellung heraus nach hinten verlagert wird.

Eine einen Bolzen 59 tragende Deckelstütze 60 ist mit dem Mitnehmer 54 über eine Stange 61 verbunden. Auf dem Bolzen 59 ist eine Rolle 62 drehbar gelagert, die sich gegen die Unterseite des Schwenkhebels 46 anlegt, wenn die vordere Höhenverstelleinrichtung 44 den Deckel 12 vorne in die Schließstellung angehoben hat und der Schwenkhebel 46 dementsprechend die in Fig. 5a dargestellte nach oben geschwenkte Lage einnimmt.

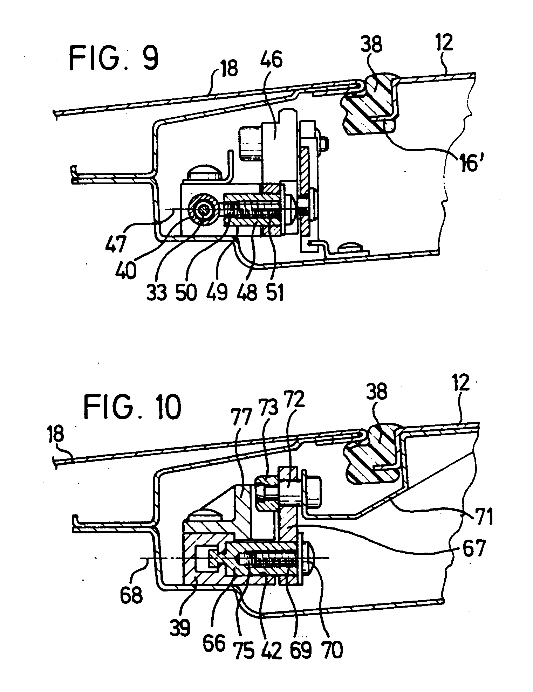

In der Gleitbahn 42 der Längsführung 39 ist ein Riegelstück 64 in Längsrichtung verschiebbar geführt, das über eine Stange 65 mit der Deckelstütze 60 und damit auch mit dem Mitnehmer 54 und dem Antriebskabel 33 fest verbunden ist. Hinter dem Riegelstück 64 sitzt ein in der Gleitbahn 42 gleichfalls längsverschiebbar angeordnetes Gleitstück 66, an dem das eine, in der Deckelschließstellung untere Ende eines kurzen Ausstellhebels 67 der hinteren Höhenverstelleinrichtung 45 für eine Schwenkbewegung um eine waagrechte Querachse 68 (Fign. 5b, 6b,7b und 10) angelenkt ist. Bei der veranschaulichten Ausführungsform greift, wie insbesondere aus Fig. 10 hervorgeht, ein zylindrischer Ansatz 69 des Gleitstücks 66 in eine komplementäre Bohrung des Ausstellhebels 67 ein, und der Ausstellhebel 67 wird gegen ein Herunterrutschen von dem Gleitstück 66 mittels einer Schraube 70 gesichert, die in eine Gewindebohrung 75 des Gleitstücks 66 eingreift.

Das deckelfeste Teil 71 (Fig. 10) ist mit dem anderen, in der Deckelschließstellung oberen Ende des Ausstellhebels 67 über einen Gelenkbolzen 72 verbunden. Auf dem bezüglich dem Dachausschnitt 17 nach außen über den Ausstellhebel 67 vorstehende Ende des Gelenkbolzens 72 ist eine Rolle 73 drehbar gelagert. Der Ausstellhebel 67 trägt eine weitere Rolle 74, die in der Deckelschließstellung mit Bezug auf die Rolle 73 nach hinten versetzt angeordnet ist.

Im Bereich der Hinterkante 76 des Dachausschnitts 17 ist eine mit der Längsführung 39 zusammenwirkende, dachfeste Kulisse 77 angeordnet, die im veranschaulichten Ausführungsbeispiel auf die Längsführung 39 aufgesetzt ist, die stattdessen aber auch gegebenenfalls mit der Längsführung 39 einstückig verbunden sein kann. Die Kulisse 77 bildet eine nach unten und hinten weisende Nockenbahn 78 sowie einen vor der Nockenbahn 78 liegenden Kulissenschlitz 79, die in der weiter unten näher erläuterten Weise mit der Rolle 74 bzw. der Rolle 73 zusammenwirken. Im vorderen Teil der Kulisse 77 ist eine sich nach unten in die Gleitbahn 42 öffnende Ausnehmung 80 ausgebildet, deren hintere Begrenzungswand 81 nach hinten und unten schräg abfällt. Die Ausnehmung 80 nimmt, wenn der Deckel 12 in seiner vorderen Endstellung steht, den oberen Teil eines Riegelsteins 82 auf (Fig. 5b), der in einer Durchgangsöffnung 83 des Gleitstücks 66 senkrecht zur Verschieberichtung dieses Gleitstücks gleitbeweglich geführt ist. Ein Riegel 84 sitzt zwischen der Unterseite eines verjüngten vorderen Endabschnitts 85 des Gleitstücks 66 und der unteren Begrenzungswand 86 der Gleitbahn 42. Der Riegel 84 ist zusammen mit dem Gleitstück 66 entlang der Gleitbahn 42 verschiebbar. Er kann außerdem gegenüber dem Gleitstück 66 eine Verschiebebewegung ausführen, die durch Anlage eines von dem Riegel 84 hochstehenden Stifts 87 an der vorderen bzw. der hinteren Begrenzungsfläche eines den Stift 87 verstellbar aufnehmenden Längsschlitzes 88 des Gleitstücks 66 begrenzt ist (Fig. 5b). Eine Feder 89, die sich vorne gegen den Riegel 84 und hinten gegen eine Widerlagerfläche 90 des Gleitstücks 66 abstützt, spannt den Riegel 84 nach vorne in die in Fig. 5b veranschaulichte Stellung vor. In dieser Stellung schiebt sich der Riegel 84 unter den Riegelstein 82, um diesen mit der Ausnehmung 80 der Kulisse 77 in Eingriff zu halten. In dem Riegelstück 64 ist eine sich nach oben öffnende Ausnehmung 91 ausgebildet, die den unteren Teil des Riegelsteins 82 aufnehmen kann, wenn der Riegel 84 entgegen der Kraft der Feder 89 mit Bezug auf das Gleitstück 66 nach hinten geschoben wird (Fig. 6b).

Das veranschaulichte Lüfterdach funktioniert wie folgt:

Befindet sich der Deckel 12 in der Schließstellung gemäß den Fign. 1, 5a, 5b und 8, ist der Schwenkhebel 46 um die Achse 47 in die in Fig. 5a dargestellte Lage geschwenkt, in welcher das deckelfeste Gleitelement 58 von der gabelförmigen Führungsbahn 57 des Schwenkhebels 46 gefaßt und nach oben in eine Stellung gebracht ist, in welcher die Deckelvorderkante 20 mit der Vorderkante des Dachausschnitts 17 mindestens nahezu bündig liegt. Die Deckelstütze 60 hat sich in dieser Stellung unter den Schwenkhebel 46 geschoben, um letzteren in der hochgeschwenkten Stellung sicher zu halten. Gleichzeitig nimmt der Ausstellhebel 67 eine im wesentlichen lotrechte Stellung gemäß Fig. 5b ein, in welcher der Gelenkbolzen 72 das deckelfeste Teil 71 in eine solche Lage bringt, daß die Hinterkante 19 des Deckels 12 mit der Hinterkante 76 des Dachausschnitts 17 mindestens nahezu bündig liegt. Der in der Durchgangsöffnung 83 des Gleitstücks 66 sitzende Riegelstein 82 greift in die Ausnehmung 80 der dachfesten Kulisse 77 ein. Damit sind das Gleitstück 66 und über die Stangen 61 und 65 auch der Mitnehmer 54 und die Deckelstütze 60 gegen Verschiebebewegungen mit Bezug auf dachfeste Teile, wie die Längsführung 39 und die feste Dachhaut 18 gesichert. Der Riegel 84 verhindert, daß der Riegelstein 82 unbeabsichtigt aus der Ausnehmung 80 austritt.

Soll der Deckel 12 ausgehend von der Schließstellung in die Lüfterstellung gemäß Fig. 2 gebracht werden, wird über den Antriebsmotor 34 oder die Handkurbel 36 das Antriebskabel 33 mit seinem antriebsseitigen Ende nach hinten verstellt. Während dabei über den Mitnehmer 54 der Kulissenzapfen 53 entlang einem vorderen, in dieser Schwenkhebelstellung parallel zur Gleitbahn 42 verlaufenden Abschnitt 92 der Kulissenbahn 52 nach hinten verstellt wird, gibt die mit dem Mitnehmer 54 über die Stange 61 verbundene Deckelstütze 60 den Schwenkhebel 46 für eine Schwenkbewegung im Uhrzeigersinn (in Fig. 5a) frei. Wandert dann anschließend der Kulissenzapfen 53 entlang dem an den Abschnitt 92 anschließenden, nach hinten ansteigenden Abschnitt 93 der Kulissenbahn 52 entlang, wird dem Schwenkhebel 46 eine Schwenkbewegung im Uhrzeigersinn (in Fig. 5a) aufgezwungen, im Verlauf deren der Schwenkhebel 46 von der in Fig. 5a dargestellten Stellung in die Schwenkstellung gemäß Fig. 6a übergeht. Der um die dachfeste Achse 47 schwenkende Schwenkhebel 46 nimmt dabei das deckelfeste Gleitelement 58 nach unten mit, wobei das Gleitelement 58 über eine Ausnehmung 94 der oberen Begrenzungswand 95 der Gleitbahn 42 in die Gleitbahn 42 eintaucht. Wie insbesondere aus den Fign. 5a und 8 zu erkennen ist, reicht das hintere Ende 99 des Schwenkhebels 46 nach hinten über den hinteren Rand 100 der Ausnehmung 94 hinaus. Dadurch wird vermieden, daß das Gleitelement 58 beim Übergang von der Führungsbahn 57 in die Gleitbahn 42, und umgekehrt, seine Führung in lotrechter Richtung verliert. Es wird ein glatter, stoßfreier Übergang gewährleistet. Aufgrund der Schwenkbewegung des Schwenkhebels 46 wird der Deckel 12 um eine von den Gelenkbolzen 72 der hinteren Höhenverstelleinrichtungen 45 bestimmte, nahe der Deckelhinterkante 19 liegende, waagrechte Schwenkachse 98 (Fig. 6b) aus der Schließstellung der Fig. 1 in die Lüfterstellung gemäß Fig. 2 verschwenkt. Über den Spalt 23 (Fig. 2) kann der Wageninnenraum wirkungsvoll entlüftet werden. Dabei hat sich das Riegelstück 64 in die in Fig. 6b veranschaulichte Stellung bewegt, in welcher das Riegelstück 64 den Riegel 84 mit Bezug auf das Gleitstück 66 entgegen der Kraft der Feder 89 zurückgeschoben hat. Das Riegelstück 64 hat sich gegen das Gleitstück 66 angelegt, um letzteres weiter nach hinten mitzunehmen. Die von dem Riegelstück 64 auf den Riegelstein 82 übertragene, nach hinten gerichtete Kraftkomponente hat den Riegelstein veranlaßt, durch Zusammenwirken mit der abgeschrägten hinteren Begrenzungswand 81 der Ausnehmung 80 die Ausnehmung 80 in der Kulisse 77 zu verlassen und sich stattdessen mit seinem unteren Ende in die Ausnehmung 91 des Riegelstücks 64 einzulegen. Dadurch wird die Arretierung des Gleitstücks 66 aufgehoben. Das Gleitstück 66 wird über den Riegelstein 82 mit dem Riegelstück 64 sowie über die Stangen 61 und 65 und den Mitnehmer 54 mit dem Antriebskabel 33 auf Mitnahme gekuppelt.

Bei weiterem Verstellen des Antriebskabels 33 nach hinten kommt das Gleitelement 58 außer Eingriff mit dem Schwenkhebel 46. Das Gleitelement 58 wird in der Gleitbahn 42 zwischen dessen unterer und oberer Begrenzungswand 86 bzw. 95 sicher geführt. Das Riegelstück 64 und das Gleitstück 66 bewegen sich gemeinsam nach hinten, wobei der Riegelstein 82 durch Anlage an der oberen Begrenzungswand 95 der Gleitbahn 42 daran gehindert wird, die Ausnehmung 91 des Riegelstücks 64 zu verlassen. Durch den Eingriff zwischen der Rolle 73 und dem Kulissenschlitz 79 wird der Ausstellhebel 67 zu einer Schwenkbewegung entgegen dem Uhrzeigersinn (in den Fign. 5b, 6b und 7) veranlaßt. Der Ausstellhebel 67 schwenkt um einen Winkel von mindestens näherungsweise 90° in die in Fig. 7 veranschaulichte Stellung. Dadurch wird der Deckel 12 im Bereich seiner Hinterkante 19 abgesenkt (Fign. 3 und 7), wobei die Rolle 73 von dem Kulissenschlitz 79 in die Gleitbahn 42 übergeht. Im Zuge dieses Bewegungsablaufs wird der Deckel 12 um das in der Gleitbahn 42 geführte Gleitelement 58 verschwenkt, das gegenüber der Deckelvorderkante 20 nach hinten versetzt ist. Infolgedessen steigt der Deckel 12 mit seiner Vorderkante wieder um einen gewissen Betrag nach oben, wie dies in Fig. 3 angedeutet ist. Der Deckel 12 kann jetzt parallel zur festen Dachhaut 18 nach hinten geschoben werden (Fig. 4), wobei deckelfeste Elemente, nämlich das Gleitelement 58 und der Gelenkbolzen 72 mit der Rolle 73, im vorderen und hinteren Deckelbereich in der Gleitbahn 42 geführt sind.

Wird die Antriebsrichtung des Antriebskabels 33 umgekehrt, wird aufgrund der nach wie vor bestehenden Kupplung zwischen Riegelstück 64 und Gleitstück 66 der Deckel 12 wieder nach vorne geschoben, bis die Rolle 74 auf die Nockenbahn 78 der Kulisse 77 trifft. Bei weiterer Vorbewegung des Gleitstücks 66 wird der Ausstellhebel 67 durch das Zusammenwirken von Rolle 74 und Nockenbahn 78 zu einer Schwenkbewegung im Uhrzeigersinn (in Fig. 7) veranlaßt. Die Rolle 73 tritt aus der Gleitbahn 42 in den Kulissenschlitz 79 über. Der Deckel 12 wird hinten hochgestellt (Fign. 2 und 6b). Dabei erreichen das Riegelstück 64 und das Gleitstück 66 wieder die in Fig. 6b veranschaulichte Stellung, in welcher der Riegelstein 82 mit der Ausnehmung 80 der Kulisse 77 ausgerichtet ist. Die von dem Riegelstück 64 auf den Riegelstein 82 ausgeübte, nach vorne gerichtete Kraftkomponente veranlaßt den Riegelstein über die geneigte hintere Begrenzungswand 96 der Ausnehmung 91 zu einer nach oben gerichteten Bewegung gegenüber dem Gleitstück 66. Dadurch kommt der Riegelstein 82 von dem Riegelstück 64 frei, und das Gleitstück 66 wird wieder mit Bezug auf die Kulisse 77 arretiert. Dadurch wird die Kupplung zwischen dem Antrieb und dem Gleitstück 66 aufgehoben.

Bei weiterer Vorbewegung des Riegelstücks 64 gibt dieses den Riegel 84 frei. Der Riegel 84 legt sich unter dem Einfluß der Feder 89 unter den Riegelstein 82 (Fig. 5b), um ein unbeabsichtigtes Lösen der Arretierung des Gleitstückes 66 zu verhindern. Der Kulissenzapfen 53 tritt in die Kulissenbahn 52 ein und bewegt sich zunächst entlang deren hinterem Abschnitt 97, welcher in der in Fig. 6a veranschaulichten Schwenkstellung des Schwenkhebels 46 parallel zu der Gleitbahn 42 verläuft. Wenn der Kulissenzapfen 53 dann den mittleren Kulissenbahnabschnitt 93 erreicht, ist das deckelfeste Gleitelement 58 in die Führungsbahn 57 des Schwenkhebels 46 eingetreten. Durch weiteres Vorbewegen des Mitnehmers 54 wird der Schwenkhebel 46 aufgrund des gegenseitigen Eingriffes von Kulissenzapfen 53 und Abschnitt 93 der Kulissenbahn 52 um die dachfeste Achse 47 entgegen dem Uhrzeigersinn (in den Fign. 5a und 6a) verschwenkt. Der Deckel 12 wird vorne angehoben und dadurch um die Schwenkachse 98 verschwenkt. Die Deckelstütze 60 schiebt sich unter den Schwenkhebel 46. Der Deckel hat wieder seine Schließstellung (Fign. 1, 5a und 5b) erreicht.

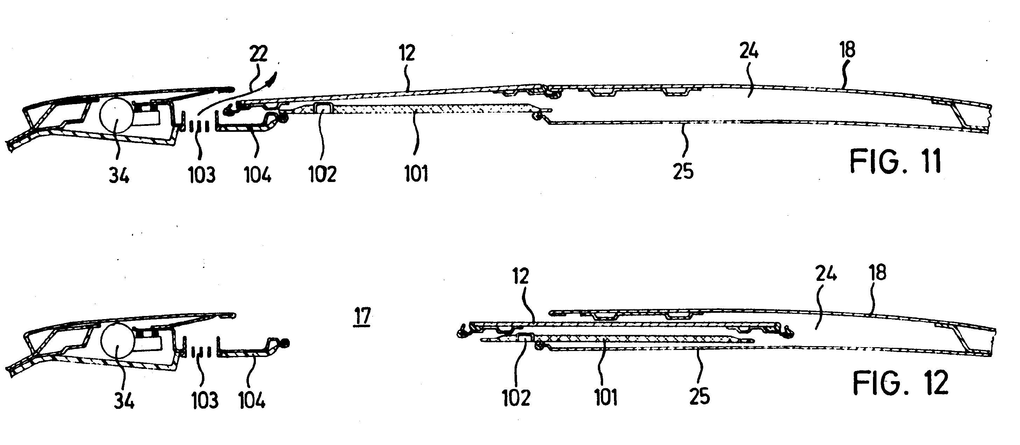

In den zuvor erläuterten Figuren ist der Deckel 12 als undurchsichtiger Blechdeckel dargestellt. Es versteht sich jedoch, daß der Deckel in bekannter Weise auch aus durchscheinendem oder durchsichtigem Werkstoff, insbesondere Glas, gefertigt sein kann. Insbesondere bei solchen Glasdeckeln wird, wie in den Fign. 11 und 12 veranschaulicht, für gewöhnlich unterhalb des Deckels 12 ein Schiebehimmel 101 angeordnet, der bei in Schließ- oder Lüfterstellung stehendem Deckel, beispielsweise von Hand über eine Griffmulde 102, wahlweise zwischen einer Schließstellung (Fig. 11) und einer Offenstellung (Fig. 12) verschoben werden kann. Dadurch läßt sich der Lichteinfall in das Wageninnere nach Belieben beeinflussen. Um in der Lüfterstellung des Deckels 1 auch bei in Schließstellung stehendem Schiebehimmel 101 die Ausbildung des Luftstromes 22 zu ermöglichen, ist bei der Ausführungsform gemäß den Fign. 11 und 12 ein Lüftungsgitter 103 in dem den vorderen Rand des Dachausschnittes 17 untergreifenden Teil eines Festhimmels 104 vorgesehen.

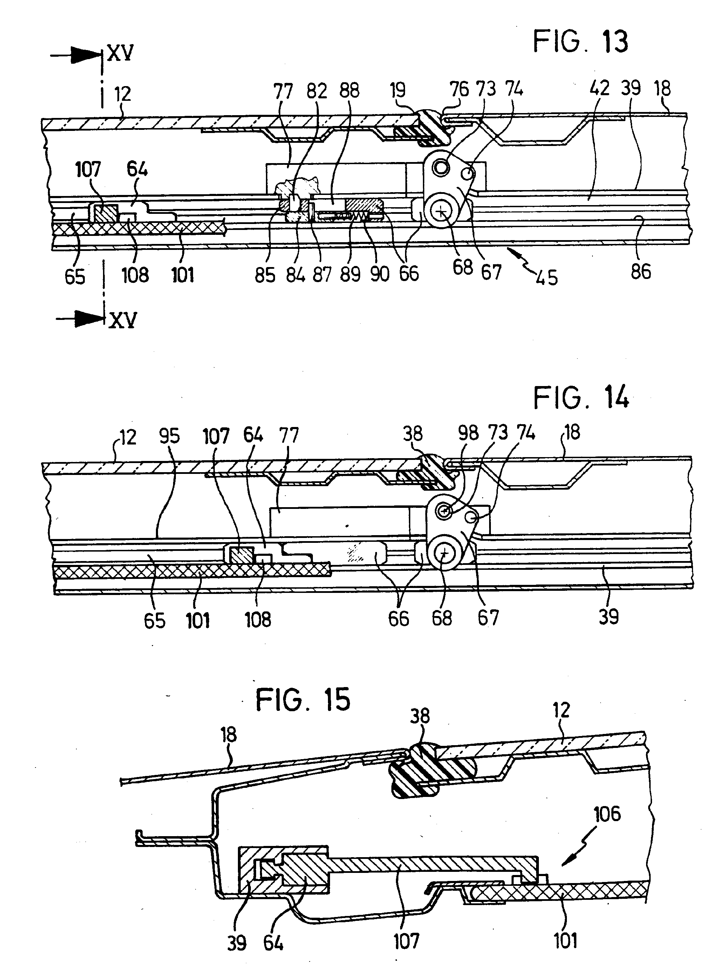

Bei den abgewandelten Ausführungsformen nach den Fign. 13 bis 17 ist dagegen eine insgesamt mit 106 bezeichnete Mitnehmervorrichtung vorhanden, die dafür sorgt, daß der in seiner Schließstellung stehende Schiebehimmel 101 selbsttätig um ein vorbestimmtes Stück nach hinten geschoben wird, wenn der Deckel 12 von der Deckelschließstellung in die Lüfterstellung verschwenkt wird. Zu der Mitnehmervorrichtung 106 gehören auf beiden Dachseiten jeweils ein mit dem Antrieb 32 verbundener Mitnehmer 107 und ein an der Oberseite des Schiebehimmels 101 sitzendes Gegenstück 108. Bei der in den Fign. 13 bis 15 veranschaulichten Ausführungsform ist der Mitnehmer 107 mit dem Riegelstück 64 einstückig verbunden, das seinerseits in fester Antriebsverbindung mit dem betreffenden Antriebskabel 33, der Stange 65, der Deckelstütze 60 mit Bolzen 59, dem Gleitelement 58 und dem Kulissenzapfen 53 steht. Der Mitnehmer 107 kann auch in anderer Weise an das Antriebskabel 33 angekuppelt sein.

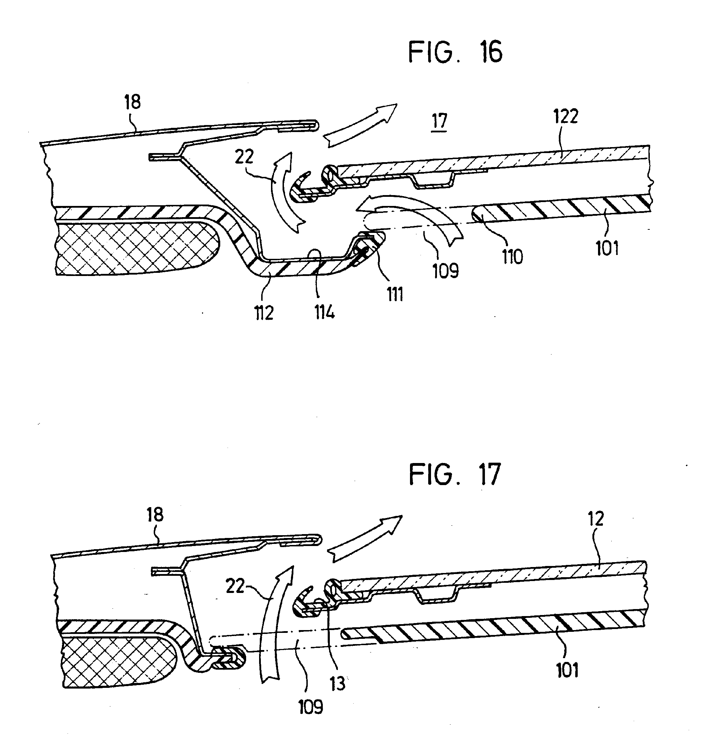

In der in Fig. 13 veranschaulichten Stellung nimmt der Deckel 12 seine Schließstellung ein, und der Schiebehimmel 111 ist gleichfalls in seine Schließstellung ganz nach vorne geschoben. Der Mitnehmer 107 und das Gegenstück 108 stehen dabei in gegenseitiger Anlage. Wird jetzt der Deckel 12 vorne in die Lüfterstellung abgesenkt, verlagert sich das Riegelstück 64 nach hinten in die Stellung gemäß Fig. 14. Dabei schiebt der Mitnehmer 107 den Schiebehimmel 101 über das Gegenstück 108 um ein gewisses Stück nach hinten. Dadurch wird ein Lüftungsspalt 109 zwischen der Vorderkante 110 des Schiebehimmels 101 und einem Öffnungsrand 111 einer festen Deckelverkleidung 112 freigelegt, durch welchen der Luftstrom 22 hindurchtreten kann. Falls erwünscht, kann der Schiebehimmel 101 aus der Stellung gemäß Fig. 16 von Hand auch weiter nach hinten bewegt werden.

Bei der Ausführungsform nach Fig. 16 ist unterhalb des vorderen Randes des Dachausschnittes 17 eine feste Wasserrinne 114 vorgesehen. Dabei kann entsprechend der Darstellung nach den Fign. 5a und 6a auf die z.B. in Fig. 3 gezeigte deckelfeste Wasserrinne 13 mindestens in diesem Bereich verzichtet werden.

Die Fig. 17 zeigt dagegen eine Variante ohne die feste Wasserrinne 114. In diesem Fall fängt die deckelfeste Wasserrinne 13 nach vorne fließende Wassertropfen auf, die dann zur Seite abgeleitet werden. Der beim Verschwenken des Deckels 12 in die Lüfterstellung selbsttätig freigelegte Lüftungsspalt ist wiederum bei 109 angedeutet.

Gegebenenfalls kann der Mitnehmer 107 mit dem Schiebehimmel 101 auch unmittelbar oder über ein elastisches Zwischenstück ständig verbunden sein, um Verschiebebewegungen des Deckels zwangsläufig mitzumachen. Eine solche Ausbildung eignet sich insbesondere für Deckel aus undurchsichtigem Werkstoff, d.h. vor allem Blechdeckel.

Im Vergleich zu der Lösung nach den Fign. 11 und 12 bleibt bei der Anordnung gemäß den Fign. 13 bis 17 im Innenraum des Fahrzeuges die von herkömmlichen Schiebehebedächern gewohnte Optik erhalten. Durch den Wegfall des Lüftungsgitters 103 werden gegebenenfalls Strömungsgeräusche weiter vermindert. Die selbsttätige Schiebehimmelverstellung bedingt bei der gezeigten Lösung durch geschickte Ausnutzung der ohnehin für die Deckelverstellung notwendigen Mechanik kaum einen Mehraufwand.

## Patentansprüche

1. Lüfterdach für Fahrzeuge mit einem in einer festen Dachhaut (18) ausgebildeten Dachausschnitt (17), der mittels eines Deckels (12) verschließbar ist, der beidseits mit einer vordere (44) und hintere (45) Höhenverstelleinrichtungen aufweisenden Stellmechanik in Wirkungsverbindung steht, wobei der Deckel mittels der vorderen Höhenverstelleinrichtungen (44) ausgehend von der Schließstellung um eine an oder nahe seiner Hinterkante liegende Schwenkachse (98) in eine Lüfterstellung verschwenkbar ist, in welcher die Deckelvorderkante (20) in Abstand unterhalb der Dachebene liegt, während die Deckelhinterkante mindestens näherungsweise in Höhe der festen Dachhaut gehalten wird, wobei der Deckel mittels der hinteren Höhenverstelleinrichtungen mit seiner Hinterkante unter die feste Dachhaut (18) absenkbar ist, und wobei der abgesenkte Deckel mittels eines Antriebes (32) entlang von dachfesten Längsführungen mindestens näherungsweise parallel zu der festen Dachhaut (18) nach hinten unter die Dachhaut in eine Offenstellung verschiebbar ist, in welcher der Deckel den Dachausschnitt (17) mindestens teilweise freilegt, und wobei die vorderen Höhenverstelleinrichtungen (44) jeweils einen zwangsverstellbaren Schwenkhebel (46) aufweisen, der im Bereich seines vorderen Endes für eine Drehbewegung um eine dachfeste, quer zur Deckelverschieberichtung verlaufende, mindestens nahezu waagrechte Achse (47) gelagert ist und mit dem der Deckel (12) nur im Bereich seiner vorderen Endstellung zwecks Höhenverstellung der Deckelvorderkante (20) lösbar gekuppelt wird.

2. Lüfterdach nach Anspruch 1, dadurch gekennzeichnet, daß deckelfeste Führungselemente (Gleitelement 58; Gelenkbolzen 72), die an oder nahe der vorderen und der hinteren Kante (20 bzw. 19) des Deckels (12) angeordnet sind, zwischen einer über den Längsführungen (39) liegenden Stellung und einer mit den Längsführungen in lotrechter Richtung ausgerichteten Absenkstellung höhenverstellbar sowie in der Absenkstellung entlang den Längsführungen verschiebbar geführt sind.

3. Lüfterdach nach Anspruch 1 oder 2, dadurch gekennzeichnet, daß der Schwenkhebel (46) zum lösbaren Kuppeln mit dem Deckel (12) eine nach hinten offene Führungsbahn (57) aufweist, in welche ein deckelfestes Gleitelement (58) eingreift, wenn der Deckel in der vorderen Endstellung steht.

4. Lüfterdach nach Ansprüchen 2 und 3, dadurch gekennzeichnet, daß der Schwenkhebel (46) bei abgesenkter Deckelvorderkante (20) eine Stellung einnimmt, in welcher das offene Ende der Führungsbahn (57) des Schwenkhebels mit einer Gleitbahn (42) der dachfesten Längsführung (39) für einen Übertritt des Gleitelements (58) von der Führungsbahn in die Gleitbahn ausgerichtet ist.

5. Lüfterdach nach einem der vorhergehenden Ansprüche, dadurch gekennzeichnet, daß zum Zwangsverstellen der Schwenkhebel (46) Betätigungsglieder (Kulissenzapfen 53) vorgesehen sind, die mit dem Antrieb (32) in ständiger Verbindung stehen.

6. Lüfterdach nach Anspruch 5, dadurch gekennzeichnet, daß in dem Schwenkhebel (46) eine Kulissenbahn (52) ausgebildet ist, in die ein das betreffende Betätigungsglied bildender Kulissenzapfen (53) eingreift, um dem Schwenkhebel eine Schwenkbewegung um die feststehende Achse (47) aufzuzwingen.

7. Lüfterdach nach einem der Ansprüche 3 bis 6, dadurch gekennzeichnet, daß die Kulissenbahn (52) im Bereich ihres hinteren Endes in die nach hinten offene Führungsbahn (57) des Schwenkhebels (46) übergeht und der Kulissenzapfen (53) beim Verschieben des Deckels (12) entlang der Längsführung (39) verstellbar ist.

8. Lüfterdach nach einem der vorhergehenden Ansprüche, dadurch gekennzeichnet, daß mit dem Antrieb (32) Stützglieder (Deckelstütze 60) zum Abstützen der Schwenkhebel (46) in der der Deckelschließstellung entsprechenden Schwenklage verbunden sind.

9. Lüfterdach nach einem der vorhergehenden Ansprüche, gekenzeichnet durch eine Verriegelungsvorrichtung (Kulisse 77, Riegelstein 82), welche die an oder nahe der Hinterkante (19) des Deckels (12) liegende Deckelschwenkachse (98) in der Deckelschließstellung und während Schwenkbewegungen des Deckels zwischen der Schließstellung und der Lüfterstellung gegen ein Längsverschieben mit Bezug auf die Dachhaut (18) verriegelt.

10. Lüfterdach nach einem der vorhergehenden Ansprüche, dadurch gekennzeichnet, daß die hinteren Höhenverstelleinrichtungen (45) jeweils einen Ausstellhebel (67) aufweisen, der einerseits an dem Deckel (12) oder einem deckelfesten Teil (71) und andererseits an einem Gleitstück (66) angelenkt ist, das entlang der betreffenden Längsführung (39) verschiebbar geführt ist.

11. Lüfterdach nach Anspruch 10, dadurch gekennzeichnet, daß der Ausstellhebel (67) eine mindestens näherungsweise lotrechte Stellung einnimmt, solange der Deckel (12) in seiner vorderen Endstellung steht.

12. Lüfterdach nach Anspruch 10 oder 11, dadurch gekennzeichnet, daß der Ausstellhebel (67) zum Absenken der Deckelhinterkante (19) um einen Winkel von mindestens näherungsweise 90° verschwenkt wird.

13. Lüfterdach nach Anspruch 2 und einem der Ansprüche 10 bis 12, dadurch gekennzeichnet, daß der Ausstellhebel (67) mit dem Deckel (12) oder dem dekkelfesten Teil (71) über einen Gelenkbolzen (72) verbunden ist, der zugleich das nahe der Deckelhinterkante (19) liegende deckelfeste Führungselement bildet, das bei abgesenkter Deckelhinterkante mit der Längsführung (39) während Deckelverschiebebewegungen in Eingriff kommt.

14. Lüfterdach nach einem der Ansprüche 10 bis 13, dadurch gekennzeichnet, daß der Ausstellhebel (67) einen Mitnehmer (Rolle 74) trägt, der sich beim Vorbewegen des Deckels (12) in seine vordere Endstellung an eine dachfeste Nockenbahn (78) anlegt und dadurch den Ausstellhebel zu einer Ausstellbewegung zwingt.

15. Lüfterdach nach einem der Ansprüche 10 bis 14, gekennzeichnet durch eine lösbare Kupplung (Riegelstück 64, Gleitstück 66, Riegelstein 82) zum selbsttätigen Kuppeln des Antriebs (32) mit dem an dem Ausstellhebel (67) angelenkten Gleitstück (66) für das Verschwenken des Ausstellhebels (67) und das Verschieben des Deckels (12).

16. Lüfterdach nach Anspruch 9 und einem der Ansprüche 10 bis 15, dadurch gekennzeichnet, daß die Verriegelungsvorrichtung (Kulisse 77, Riegelstein 82) und die lösbare Kupplung (Riegelstück 64, Gleitstück 66, Riegelstein 82) derart in Wechselwirkung miteinander stehen, daß beim Einrücken der Kupplung die Verriegelungsvorrichtung zwangsweise entriegelt wird und bei Verriegeln der Verriegelungsvorrichtung die Kupplung zwangsweise ausgerückt wird.

17. Lüfterdach nach Anspruch 16, dadurch gekennzeichnet, daß der lösbaren Kupplung (Riegelstück 64, Gleitstück 66, Riegelstein 82) und der Verriegelungsvorrichtung (Kulisse 77, Riegelstein 82) ein mit dem Gleitstück (66) in ständiger Verbindung stehender Riegelstein (82) gemeinsam ist, der unter dem Einfluß des Antriebes (32) das Gleitstück (66) wechselweise in lösbare Formschlußverbindung mit einem mit dem Antrieb ständig verbundenen, entlang der Längsführung (39) verschiebbaren Antriebselement (Riegelstück 64) bzw. mit einem dachfesten Teil (Kulisse 77) bringt.

18. Lüfterdach nach einem der vorhergehenden Ansprüche, dadurch gekennzeichnet, daß die Stellmechanik (vordere Höhenverstelleinrichtungen 44, hintere Höhenverstelleinrichtungen 45) und die dachfesten Längsführungen (39) zu beiden Seiten des Dachausschnitts (17) und des Deckels (12) unterhalb der festen Dachhaut (18) angeordnet sind.

19. Lüfterdach nach einem der vorhergehenden Ansprüche, dadurch gekennzeichnet, daß die Stellmechanik (vordere Höhenverstelleinrichtungen 44, hintere Höhenverstelleinrichtungen 45) derart ausgelegt und mit dem Antrieb (32) gekoppelt ist, daß bei gleichsinniger Betätigung des Antriebs in der einen Richtung der Deckel (12) ausgehend von der Schließstellung zunächst in die Lüfterstellung mit abgesenkter Vorderkante (20) gebracht, dann der Deckel hinten abgesenkt und schließlich der abgesenkte Deckel nach hinten geschoben wird, und daß bei gleichsinniger Betätigung des Antriebs in entgegengesetzter Richtung der abgesenkte, zurückgeschobene Deckel in seine vordere Endstellung gebracht und daraufhin der Deckel zunächst nur hinten und dann auch vorne angehoben wird.

20. Lüfterdach nach einem der vorhergehenden Ansprüche, dadurch gekennzeichnet, daß beim Verstellen des Deckels (12) von der Lüfterstellung in die Offenstellung die Deckelvorderkante (20) vor und/oder während der Deckelverschiebebewegung zu einer nach oben gerichteten Bewegung in eine Höhe veranlaßt wird, die zwischen der Höhenlage der Deckelvorderkante in der Lüfterstellung und der Höhenlage der Deckelvorderkante in der Schließstellung liegt.

21. Lüfterdach, nach einem der vorhergehenden Ansprüche, gekennzeichnet durch einen unterhalb des Deckels (12) angeordneten Schiebehimmel (101), der über eine Mitnehmervorrichtung (106) mit dem Antrieb (32) des Deckels derart gekuppelt ist, daß der in seiner Schließstellung stehende Schiebehimmel beim Verschwenken des Deckels von der Schließstellung in die Lüfterstellung selbsttätig in eine Stellung zurückgeschoben wird, in welcher vor dem Schiebehimmel ein Lüftungsspalt (109) freigelegt wird.

22. Lüfterdach nach Anspruch 21, dadurch gekennzeichnet, daß zu dem Antrieb (32) des Deckels (12) Antriebskabel (33) und mit dem Antriebskabel in fester Antriebsverbindung stehende Bauteile (Kulissenzapfen 53, Bolzen 59, Deckelstütze 60, Riegelstück 64, Stange 65) gehören, sowie daß die Mitnehmereinrichtung einen Mitnehmer (107) aufweist, der an dem Kabel oder einem der mit dem Kabel in Antriebsverbindung stehenden Bauteile angebracht ist.

23. Lüfterdach nach Ansprüchen 15 und 22, dadurch gekennzeichnet, daß der Mitnehmer (107) mit einem antriebskabelfesten Teil (Riegelstück 64) der lösbaren Kupplung (Riegelstück 64, Gleitstück 66, Riegelstein 82) verbunden ist.

## Claims

1. A ventilator roof for vehicles, with a roof opening (17) constructed in a fixed roof skin (18) and which can be closed by means of a cover (12) which is actively connected on both sides to an adjustment mechanism having front (44) and rear (45) height adjustment devices, the cover being capable of being pivoted by means of the front height adjustment devices, starting from the closed position, about a pivot axis (98) disposed at or close to a rear edge of the cover, into a ventilation position in which the front edge (20) of the cover is at a distance below the plane of the roof, while the rear edge of the cover is maintained at least approximately at the height of the fixed roof skin, the cover being capable of being lowered by means of the rear height adjustment devices so that its rear edge is below the roof skin (18), the lowered cover being capable of being displaced by means of a drive (32) along longitudinal guides rigid with the roof and at least approximately parallel with the fixed roof skin (18) rearwardly under the roof skin and into an open position in which the cover at least partially exposes the roof opening (17) and in which each front height adjustment device (44) has a positionally adjustable pivot lever (46) which is mounted in the region of its front end for rotary movement about an at least approximately horizontal axis (47) rigid with the roof and extending transversely to the direction of displacement of the cover, and with which the cover (12) is separably coupled only in the region of its front extreme position, for the purpose of adjusting the height of the front edge (20) of the cover.

2. A ventilation roof according to Claim 1, characterised in that guide elements (sliding element 58; hinge pin 72) rigid with the cover and which are disposed at or close to the front and rear edges (20, 19) of the cover (12), the said guide elements being adjustable in height between a position disposed above the longitudinal guides (39) and a lowered position in vertical alignment with the longitudinal guides, the said guide elements being guided for displacement along the longitudinal guides in the said lowered position.

3. A ventilation roof according to Claim 1 or 2, characterised in that the pivot lever (46) is provided with a rearwardly open guide track (57) for separable connection to the cover (12) and which is engaged by a slide element (58) rigid with the cover, when the latter is in the fully forward position.

4. A ventilation roof according to Claims 2 and 3, characterised in that when the front edge (20) of the cover is lowered, the pivot lever (46) assumes a position in which the open end of the guide track (57) of the pivot lever is in alignment with a slide track (42) of the longitudinal guide (39) which is rigid with the roof, so that the sliding element (58) is able to pass from the guide track and into the slide track.

5. A ventilation roof according to one of the preceding Claims, characterised in that for a positive adjustment of the pivoting lever (46), actuating members (link journals 53) are provided which are permanently connected to the drive (32).

6. A ventilation roof according to Claim 5, characterised in that there is constructed in the pivot lever (46) a link track (52) engaged by the link journal (53) which forms the relevant actuating member in order to impose on the pivot lever a pivoting movement about the fixed axis (47).

7. A ventilation roof according to one of Claims 3 to 6, characterised in that the link track (52), in the region of its rear end, merges into the rearwardly open guide track (57) of the pivot lever (46) while the link journal (53) is adjustable upon displacement of the cover (12) along the longitudinal guide (39).

8. A ventilation roof according to one of the preceding Claims, characterised in that support elements (roof support 60) are connected to the drive (32) in order to support the pivot lever (46) in the pivoted position corresponding to the closed position of the cover.

9. A ventilation roof according to one of the preceding Claims, characterised by a locking device (link 77, locking slide 82) which locks the cover pivot axis (98) which is disposed at or close to the rear edge (19) of the cover (12) in the closed position of the cover and during pivoting movements of the cover between the closed position and the ventilating position locks it against a longitudinal displacement in relation to the roof skin (18).

10. A ventilation roof according to one of the preceding Claims, characterised in that the rear height adjustment devices (45) each comprise a push-out lever (67) which is articulated at one end on the cover (12) or on a part (71) rigid with the cover and at the other end on a sliding member (66) which is guided for displacement along the relative longitudinal guides (39).

11. A ventilation roof according to Claim 10, characterised in that the push-out lever (67) assumes an at least approximately vertical position while the cover (12) is in its extreme forward position.

12. A ventilation roof according to Claim 10 or 11, characterised in that the push-out lever (67) is pivoted through an angle of at least approximately 90° in order to lower the rear edge (19) of the cover.

13. A ventilation roof according to Claim 2 and one of claims 10 or 12, characterised in that the push-out lever (67) is connected to the cover (12) or to the part (71) rigid with the cover via a hinge pin (72) which at the same time constitutes the guide element rigid with the cover and disposed close to the rear edge (19) of the cover and which, when the rear edge of the cover is lowered, engages the longitudinal guide (39) during displacement movements of the cover.

14. A ventilation roof according to one of Claims 10 to 13, characterised in that the push-out lever (67) carries an entraining means (roller 74) which, during forwards movement of the cover (12), into its extreme forwards position, bears on a cam track (78) which is rigid with the roof, so forcing the push-out lever to perform a pushing out movement.

15. A ventilation roof according to one of Claims 10 to 14, characterised by a separable coupling (locking member 64, sliding member 66, locking slide 82) for automatic coupling of the drive (32) to the sliding member (66) articulated on the push-out lever (67) for pivoting of the push-out lever (67) and displacement of the cover (12).

16. A ventilation roof according to Claim 9 and one of Claims 10 to 15, characterised in that the locking device (link 77, locking slide 82) and the separable coupling (locking member 64, sliding member 66, locking slide 82) interact in such a way that when the coupling is engaged the locking device is positively disengaged and when the locking device is locked the coupling is positively disengaged.

17. A ventilation roof according to Claim 16, characterised in that the separable coupling (locking member 64, sliding member 66, locking slide 82) and the locking device (link 77, locking slide 82) have in common a locking slide (82) which is in constant connection with the sliding member (66) and which under the influence of the drive (32) alternately brings the sliding member (66) into a separable form-locking connection with a drive element (locking member 64) which is constantly connected to the drive and which is displaceable along the longitudinal guide (39), or with a part (link 77) rigid with the roof.

18. A ventilation roof according to one of the preceding Claims, characterised in that the positioning mechanism (front height adjusting devices 44, rear height adjusting devices 45) and the longitudinal guides (39) rigid with the roof are disposed on both sides of the roof opening (17) and the cover (12), below the fixed roof skin (18).

19. A ventilation roof according to one of the preceding Claims, characterised in that the positioning mechanism (front height adjusting devices 44, rear height adjusting devices 45) are so designed and coupled to the drive (32) that upon equi-directional actuation of the drive in one direction the cover (12), starting from the closed position, is moved firstly into the ventilation position with the front edge (20) lowered, after which the cover is lowered at the back and finally the lowered cover is pushed to the rear and in that with equi-directional actuation of the drive in the opposite direction the lowered and pushed-back cover is moved into its extreme forward position whereupon the cover is initially raised just rearwardly and then also forwardly.

20. A ventilation roof according to one of the preceding Claims, characterised in that upon displacement of the cover (12) from the ventilation position into the open position the front edge (20) of the cover prior to and/or during the displacement of the cover is caused to perform an upwardly directed movement to a height between the height of the front edge of the cover in the ventilation position and the height of the front edge of the cover in the closed position.

21. A ventilation roof according to one of the preceding Claims, characterised by, disposed below the cover (12), a roof headliner (101) which is so coupled via a drive device (106) to the drive (32) of the cover that when the headliner is in its closed position, upon pivoting of the cover from the closed position into the ventilation position, it is automatically pushed back into a position in which a ventilation gap (109) is exposed in front of the roof headliner.

22. A ventilation roof according to Claim 21, characterised in that the drive (32) of the cover (12) comprises drive cables (33) and components which are in a fixed driving connection with the drive cables (link journal 53, pin 59, roof support 60, locking member 64, rod 65), and in that the entraining means comprises a catch (107) mounted on the cable or on one of the components which are in a driving relationship with the cable.

23. A ventilation roof according to Claims 15 and 22, characterised in that the catch (107) is connected to a part rigid with the drive cable (locking member 64) of the separable coupling (locking member 64, sliding member 66, locking slide 82).

## Revendications

1. Toit d'aération pour véhicules présentant, découpé dans un toit fixe (18) une ouverture (17) qui peut être obturée par un capot (12) soumis de chaque côté à l'action d'un mécanisme de manoeuvre comportant un dispositif avant et un dispositif arrière de réglage de hauteur et dans lequel
- le capot peut, sous l'action des dispositifs avant de réglage de hauteur et par basculement autour d'un axe (98) situé sur ou à proximité de son bord postérieur, passer de la position de fermeture à une position d'aération dans laquelle le bord antérieur (20) du capot se trouve à une certaine distance en-dessous du plan du toit, tandis que le bord postérieur se trouve maintenu au moins approximativement au niveau du toit fixe,
- le capot peut être abaissé par l'action du dispositif arrière de réglage de hauteur de manière à ce que son bord arrière se trouve en-dessous du niveau du toit fixe,
- le capot ainsi abaissé peut être amené en une position d'ouverture, sous le toit fixe, par l'action d'un mécanisme d'entraînement (32) le déplaçant vers l'arrière, sur des guides longitudinaux solidaires du toit, dans un mouvement sensiblement parallèle au toit, la position d'ouverture correspondant à la libération au moins partielle de la découpe du toit,
- les dispositifs avant de réglage de hauteur (44) comportant chacun un levier basculant (46) à déplacement imposé monté de manière à pouvoir pivoter, dans la zone de son extrémité avant, autour d'un axe (47) solidaire du toit, sensiblement horizontal et transversal à la direction de coulissement du capot, le capot (12) étant accouplé de manière amovible, seulement lorsqu'il se trouve près de sa position extrême avant, avec le levier (46) de manière à assurer le réglage en hauteur du bord avant (20) du capot.

2. Toit d'aération selon la revendication 1, caractérisé en ce que les éléments de guidage solidaires du capot (élément de glissière 58, pivot d'articulation 72), qui sont situés sur ou près des bords avant et arrière (20, 19) du capot (12), peuvent être réglés en hauteur entre une position située au dessus des guides longitudinaux (39) et une position abaissée alignée avec les guides longitudinaux en direction verticale et dans laquelle les éléments de guidage peuvent coulisser le long des guides longitudinaux.

3. Toit d'aération selon la revendication 1 ou 2, caractérisé en ce que le levier basculant (46), afin de pouvoir s'accoupler de manière amovible avec le capot (12) est équipé d'une piste de guidage (57) ouverte vers l'arrière et dans laquelle vient s'engager un élément glissant (58) solidaire du capot, lorsque celui-ci se trouve dans sa position extrême avant.

4. Toit d'aération selon la revendication 2 et 3, caractérisé en ce que le levier basculant (46) lorsque le bord avant (20) du capot est abaissé, prend une position dans laquelle l'extrémité ouverte de la piste de guidage (57) du levier basculant se trouve alignée avec une piste de glissement (42) du guide longitudinal (39) solidaire du toit, de manière à permettre à l'élément glissant (58) de passer de la piste de guidage à la piste de glissement.

5. Toit d'aération selon une des revendications précédentes, caractérisé en ce que pour assurer le déplacement imposé du levier basculant (46), il est prévu des organes actifs (pivots de coulisse 53) en liaison permanente avec le dispositif d'entraînement (32).

6. Toit d'aération selon la revendication 5, caractérisé en ce que le levier basculant (46) est équipé d'une piste de coulisse (52) dans laquelle s'engage le pivot de coulisse (53) constituant un élément d'actionnement, de manière à imposer au levier basculant un pivotement autour de l'axe fixe (47).

7. Toit d'aération selon une des revendications 3 à 6, caractérisé en ce que la piste de coulisse (52), dans sa zone extrême arrière, se confond à la piste de guidage (57), ouverte vers l'arrière, du levier oscillant (46) et le pivot de coulisse (53) est réglable le long du guidage longitudinal par coulissement du capot (12).

8. Toit d'aération selon une des revendications précédentes, caractérisé en ce que des organes de soutien (supports de capot 60) sont reliés au dispositif d'entraînement (32) afin de soutenir le levier bas avant (46) dans la position basculée correspondant à la position de fermeture du capot.

9. Toit d'aération selon une des revendications précédentes, caractérisé en ce qu'il comporte un dispositif de verrouillage (coulisse 77, targette 82) qui empêche l'axe de basculement (98) du capot placé sur ou près du bord arrière (19) du capot (12), en position de fermeture du capot et pendant le basculement du capot entre la position de fermeture et la position d'aération, de se déplacer longitudinalement par rapport au toit fixe (18).

10. Toit d'aération selon une des revendications précédentes caractérisé en ce que les dispositifs arrière de réglage de hauteur (45) comportent chacun un levier de relevage (67) articulé, d'une part au capot (12) ou à une pièce (71) solidaire de celui-ci, d'autre part à un patin (66) pouvant coulisser le long du guide longitudinal (39) correspondant.

11. Toit d'aération selon la revendication 10, caractérisé en ce que le levier de relevage (67) occupe une position au moins sensiblement verticale tant que le capot (12) se trouve dans sa position extrême avant.

12. Toit d'aération selon la revendication 10 ou 11, caractérisé en ce que le levier de relevage (67), pour faire s'abaisser le bord arrière du capot (19), bascule d'un angle d'environ 90°.

13. Toit d'aération selon la revendication 2 et une des revendications 10 à 12, caractérisé en ce que le levier de relevage (67) est articulé au capot (12) ou à une pièce, solidaire de celui-ci, par l'intermédiaire d'un pivot (72) qui constitue également l'organe de guidage, solidaire du capot, situé près du bord arrière de celui-ci et qui vient en prise avec le guidage longitudinal (39) lorsque, le bord arrière du capot étant abaissé, le capot coulisse.

14. Toit d'aération selon une des revendications 10 à 13, caractérisé en ce que le levier de relevage (67) porte un organe d'entraînement (galet 74) qui pendant le mouvement d'avancée du capot (12) vers sa position extrême avant s'appuie sur une rampe de guidage (78) solidaire du toit et oblige ainsi le levier de relevage à se redresser.

15. Toit d'aération selon une des revendications 10 à 14, caractérisé en ce qu'il comporte un accouplement amovible (pièce de verrouillage 64, patin 66, targette 82) qui produisent l'accouplement automatique de l'entraînement (32) et du patin (66) articulé au levier de relevage (67) pour faire basculer le levier (67) et coulisser le capot (12).

16. Toit d'aération selon la revendication 9 et une revendication 10 à 15, caractérisé en ce que le dispositif de verrouillage (coulisse 77, targette 82) et l'accouplement amovible (pièce de verrouillage 64, patin 66, targette 82) sont associés entre eux en alternative opposée c'est-à-dire que, lorsqu'on ferme l'accouplement, le dispositif de verrouillage est automatiquement enclenché tandis que, si on ferme celui-ci, c'est l'accouplement qui se trouve automatiquement déclenché.

17. Toit d'aération selon la revendication 16, caractérisé en ce que l'accouplement amovible (pièce de verrouillage 64, patin 66, targette 82) et le dispositif de verrouillage (coulisse 77, targette 82) ont en commun une targette (82) en liaison constante avec le patin (66) et qui, sous l'action de l'entraînement (32) met alternativement le patin (66) en liaison amovible par combinaison de formes avec un élément d'entraînement (pièce de verrouillage 64) coulissant le long du guide longitudinal (39) et relié en permanence au dispositif d'entraînement, ou en liaison avec une pièce solidaire du toit (coulisse 77).

18. Toit d'aération selon une des revendications précédentes, caractérisé en ce que le mécanisme de réglage (dispositifs avant de réglage de hauteur 44, dispositifs arrière de réglage de hauteur 45) et les guides longitudinaux (39) solidaires du toit de deux côtés de la découpe (17) et du capot (12) sont déposés sur le toit fixe (18).

19. Toit d'aération selon une des revendications précédentes, caractérisé en ce que le mécanisme de réglage (dispositifs avant de réglage de hauteur 44, dispositifs arrière de réglage de hauteur 45) sont disposés et accouplés à l'entraînement (32) de telle manière qu'en manoeuvrant l'entraînement dans un sens, le capot (12) partant de la position de fermeture vient tout d'abord en position d'aération avec abaissement de son bord avant (20), puis son bord arrière s'abaisse et l'ensemble du capot abaissé coulisse vers l'arrière, la manoeuvre de l'entraînement dans l'autre sens ramenant dans la position extrême avant le capot abaissé et reculé, qui se relève alors successivement de l'arrière puis de l'avant.

20. Toit d'aération selon une des revendications précédentes, caractérisé en ce que lorsqu'on fait passer le capot (12) de la position d'aération à la position ouverte, le bord antérieur (20) du capot, avant et/ou pendant le mouvement de coulissement de capot subit un déplacement vers le haut qui amène ce bord à un niveau compris entre ceux qu'il occupe en position d'aération et en position de fermeture.

21. Toit d'aération selon une des revendications précédentes, caractérisé en ce qu'il comporte, sous le capot (12), un ciel coulissant (101) accouplé par l'intermédiaire d'un dispositif de mise en liaison (106), à l'entraînement (32) du capot de sorte que le ciel coulissant lorsqu'il est en position de fermeture, se trouve ramené automatiquement dans une position libérant une fente d'aération (109) avant du ciel coulissant, quand le capot bascule pour passer de la position de fermeture à la position d'aération.

22. Toit d'aération selon la revendication 21, caractérisé en ce que le mécanisme d'entraînement (32) du capot comprenant un câble d'entraînement (33) en liaison permanente avec divers co-éléments (pivot de coulisse 53, pivot 59, support de capot 60, pièce de verrouillage 64, tige 65), tandis que le dispositif de mise en liaison comporte un entraîneur (107) monté sur le câble ou sur des éléments reliés au câble.

23. Toit d'aération selon la revendication 15 et 22, caractérisé en ce que l'entraîneur (107) est relié à une pièce solidaire de câble d'entraînement (pièce de verrouillage 64) faisant partie de l'accouplement amovible (pièce de verrouillage 64, patin 66, targette 82).
